# EUROPÄISCHE PATENTANMELDUNG

(11) **EP 0 635 925 A2**
(43) Veröffentlichungstag der Anmeldung: **25.01.1995**
(21) Anmeldenummer: 94202112.2
(22) Anmeldetag: 19.07.1994
(51) Int. Cl.: H02K 1/02, H02K 1/27

(54) **Verkleinerung der Eisenverluste in dem mit dem Magneten verbundenen magnetischen Rückschluss einer permanentmagnetisch erregten elektrischen Maschine**

(30) Priorität: 23.07.1993 DE 4324786
(71) Anmelder: Philips Patentverwaltung GmbH, 22335 Hamburg (DE); PHILIPS ELECTRONICS N.V., 5621 BA Eindhoven (NL)
(72) Erfinder: Bolte, Ekkehard, Dr.-Ing., D-20097 Hamburg (DE); Steinbusch, Hans, D-20097 Hamburg (DE)
(74) Vertreter: von Laue, Hanns-Ulrich, Dipl.-Ing.

(57) **Zusammenfassung**

Die Erfindung bezieht sich auf eine permanentmagneterregte elektrische Maschine, insbesondere Außenläufer- oder Innenläufermotor, mit gegeneinander bewegbaren Motorteilen (10, 20), von denen das erste Motorteil (10) in einem Luftspalt (1) mittels an einem Joch angeordneter Permanentmagnete (11), die mit dem Weicheisenjoch einen magnetischen Rückschluß bilden, ein mehrpoliges Erregerfeld ausbildet und von denen das zweite Motorteil (20) ein Weicheisenjoch (21) mit in Richtung auf den Luftspalt (1) vorstehenden Polzähnen (22) ist, die mit Spulen (23) umwickelt sind, wobei das Joch (12) des ersten die Permanentmagnete tragenden Motorteils (10) aus Bauteilen hoher magnetischer und niedriger elektrischer Leitfähigkeit gebildet ist, so daß der magnetische Fluß in diesem Joch (12) nicht reduziert, die Ausbildung der Wirbelströme jedoch so weit wie möglich reduziert ist.

## Beschreibung

Die Erfindung bezieht sich auf eine permanentmagneterregte elektrische Maschine, insbesondere Außenläufer- oder Innenläufermotor, mit gegeneinander bewegbaren Motorteilen, von denen das erste Motorteil in einem Luftspalt mittels an einem Weicheisenjoch angeordneter Permanentmagnete, die mit dem Weicheisenjoah einen magnetischen Rückschluß bilden, ein mehrpoliges Erregerfeld ausbildet und von denen das zweite Motorteil ein Weicheisenjoch mit in Richtung auf den Luftspalt vorstehenden Polzähnen ist, die mit Spulen umwickelt sind.

Derartige Motoren sind als Rotationsmotoren beispielsweise aus der DE 28 23 208 C2 und aus der DE 31 22 049 C2 bekannt und werden beispielsweise in elektrischen Haushaltsgeräten, Rasierern und Laufwerken eingesetzt. Bei derartigen Motoren besteht das Problem, daß ihr Wirkungsgrad klein ist, obwohl das mehrpolige Erregerfeld im Luftspalt mittels Permanentmagneten bei stillstehendem Motor verlustfrei ausgebildet wird.

Werden diese Motoren als Antriebe in batteriegespeisten Geräten eingesetzt, so reduziert ihr kleiner Wirkungsgrad die mit einem Satz Batterien erreichbare Gesamtbetriebszeit. Unabhängig von der Art der Energiezufuhr führt die im Motor entstehende Wärme zur thermischen Ausdehnung von Teilen des Motors selbst und von Teilen des angetriebenen Gerätes. Es müssen Maßnahmen getroffen werden, um eine Störung des bestimmungsgemäßen Betriebes des angetriebenen Gerätes aufgrund dieser thermischen Ausdehnungen zu verhindern.

In solchen mittels Permanentmagneten erregten Motoren treten Verluste in Form von Kupferverlusten in den Spulen des mit den Polzähnen versehenen zweiten Motorteiles auf, die um die vom Weicheisenjoch in Richtung auf den Luftspalt vorstehenden Polzähne gewickelt sind. Eisenverluste treten auf in dem mit dem Permanentmagneten verbundenen magnetischen Rückschluß des ersten Motorteils sowie im Weicheisenjoch und den in Richtung auf den Luftspalt vorstehenden Polzähnen des zweiten Motorteils.

Aufgrund der Drehbewegung der Maschine verschieben sich die beiden Motorteile gegeneinander, wodurch sich die magnetischen Felder auch in den Weicheisenjochen in ihrer Größe und Richtung ändern. Diese Schwankungen der magnetischen Felder verursachen die Eisenverluste in den Weicheisenjochen. In den Spulen des zweiten Motorteiles fließen Ströme, die dort die Kupferverluste verursachen.

Die sich ihrer Größe nach ändernden magnetischen Felder in den vom Weicheisenjoch des zweiten Motorteiles in Richtung auf den Luftspalt vorstehenden Polzähne erzeugen zusammen mit den Strömen, die in den Spulen fließen, in bekannter Weise das für den Betrieb derartiger Motoren charakteristische Drehmoment. Die durch diese magnetischen Felder und Ströme im ersten und zweiten Motorteil verursachten Verluste dürfen deshalb nur in einer Weise reduziert werden, die nicht gleichzeitig zu einer Verringerung des Drehmomentes des Motors führt. Dazu wird in bekannter Weise das Weicheisenjoch des zweiten Motorteiles mittels Elektroblech senkrecht zur Drehachse des Motors lamelliert.

Die im zweiten Motorteil aufretenden Eisenverluste sind stark abhängig von der Gestaltung der Polzähne und dem Abstand zwischen zwei benachbarten Polzähnen dieses Motorteiles. Die Verluste im ersten Motorteil treten im wesentlichen in dessen Eisenjoch auf.

Es ist Aufgabe der Erfindung, die Eisenverluste im die Permanentmagneten tragenden Eisenjoch so weit zu verringern, daß die Verluste zwar reduziert sind, das Drehmoment jedoch nicht beeinträchtigt ist.

Die gestellte Aufgabe ist erfindungsgemäß dadurch gelöst, daß das Joch des ersten, die Permanentmagnete tragenden Motorteils aus Bauteilen hoher magnetischer und niedriger elektrischer Leitfähigkeit gebildet ist, so daß der magnetische Fluß in diesem Joch nicht, die Ausbildung der Wirbelströme jedoch so weit wie möglich, reduziert ist.

Durch den Einsatz von Werkstoffen mit niedriger elektrischer und hoher magnetischer Leitfähigkeit im Joch des die Permanentmagneten tragenden Motorteils wird die Ausbildung der Wirbelströme weitgehend unterdrückt, während der Jochfluß nicht reduziert wird.

Das Erfordernis der hohen magnetischen und niedrigen elektrischen Leitfähigkeit macht verschiedene Ausgestaltungen des magnetischen Rückschlusses für die Permanentmagnete möglich. So ist nach einer weiteren Ausgestaltung der Erfindung vorgesehen, daß das Joch des ersten Motorteils aus einem Verbundwerkstoff mit hoher magnetischer und niedriger elektrischer Leitfähigkeit besteht. Ein solcher Verbundwerkstoff ist beispielsweise Nickeleisen.

Ebenso ist es nach einer weiteren Ausgestaltung der Lösung möglich, daß der Werkstoff des Joches des ersten Motorteils Siliziumeisen ist.

Wieder eine andere Ausgestaltung der Erfindung sieht vor, daß das Joch des ersten Motorteils aus senkrecht zur Motorachse lamelliertem Elektro(z.B. Silizium)-Blech besteht.

Eine Weiterbildung der Ausgestaltung mit lamelliertem Elektro(Silizium)-Blech sieht vor, daß das Joch des ersten Motorteils entweder aus parallel zur Motorachse gewickeltem, dünnem Elektro(Silizium)-Blech besteht oder daß der Blechwickel aus amorphem Eisen besteht.

In allen Fällen ist die Forderung nach hoher magnetischer und niedriger elektrischer Leitfähigkeit erfüllt.

Die Verluste reduzierende Ausgestaltung kommt in besonderer Weise zur Geltung, wenn man hochremanentes Magnetmaterial, wie Selten-Erde-Material, beispielsweise Samarium-Cobalt oder Neodymium-Eisen-Bor, einsetzt.

Die Erfindung wird anhand der Zeichnungen näher erläutert. Es zeigen.
Fig. 1 ein Schnittbild einer permanentmagnetisch erregten elektrischen Maschine mit beispielsweise vier vom Permanentmagneten des ersten Motorteils erregten Polen und drei vom Weicheisenjoch des zweiten Motorteils in Richtung auf den Luftspalt vorstehenden Polzähnen,
Fig. 2 den schematischen Verlauf zweier Feldlinien im Bereich des Luftspaltes,
Fig. 3 die zu den beiden in Fig. 2 gezeigten Feldlinien gehörenden Arbeitspunkte des Permanentmagneten,
Fig. 4 die gemessenen Eisenverluste in einem permanentmagnetisch erregten Gleichstrommotor nach Fig. 1.

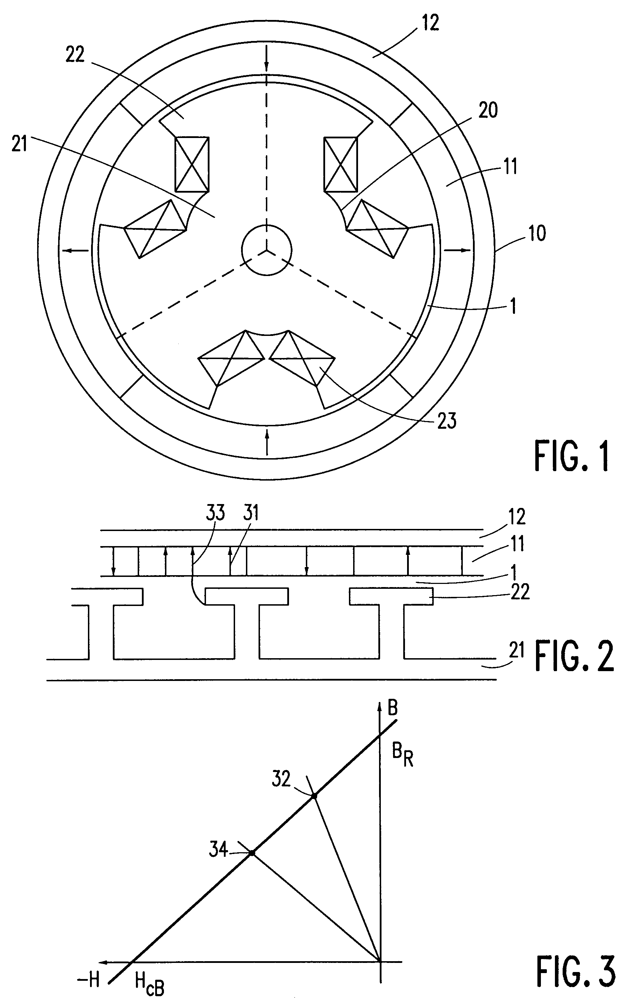

Fig. 1 zeigt schematisch einen Schnitt durch eine permanentmagnetisch erregte elektrische Maschine. Die Maschine hat einen ersten Teil 10 mit einem mehrpolig magnetisierten Permanentmagneten 11, der in ein ihn umschließendes Joch 12 eingepaßt ist. Das erste und das zweite Motorteil 20 sind gegeneinander drehbar gelagert. Dieses zweite Motorteil 20 hat ein Weicheisenjoch 21 mit in Richtung auf den Luftspalt 1 vorstehenden Polzähnen 22, die mit Spulen 23 umwickelt sind.

Fig. 2 und Fig. 3 zeigen, wie die Eisenverluste im mit dem Permanentmagneten 11 des ersten Motorteils verbundenen Joch 12 entstehen. Für Feldlinien, die wie die Feldlinie 31 in Fig. 2 im Luftspalt 1 im Bereich der Polzähne 22 verlaufen, ist der wirksame magnetische Widerstand verhältnismäßig klein, weshalb der Arbeitspunkt 32 des Permanentmagneten 11 an dieser Stelle, wie in Fig. 3 gezeigt, nahe bei der Remanenz des Permanentmagneten ist.

Dagegen ist für Feldlinien, die wie die Feldlinie 33 in Fig. 2 im Luftspalt 1 im Bereich einer Lücke zwischen zwei Polzähnen verlaufen, der wirksame magnetische Widerstand verhältnismäßig groß, weshalb der hierzu gehörende Arbeitspunkt 34 des Permanentmagneten 11 an dieser Stelle, wie in Fig. 3 gezeigt, weit unterhalb der Remanenz des Permanentmagneten liegt.

Bewegen sich jetzt die Motorteile 10 und 20 relativ zueinander, so schwankt der Arbeitspunkt des Permanentmagneten 11 an jeder Stelle zwischen den durch die Arbeitspunkte 32 und 34 in Fig. 3 gegebenen Extremwerte. Die damit verbundenen Schwankungen der Größe des magnetischen Feldes im Bereich des Joches 12 hinter der betreffenden Stelle des Permanentmagneten 11 führen dort zu Eisenverlusten. Diese Verluste werden durch die erfindungsgemäße Verwendung eines Bauteiles von hoher magnetischer und niedriger elektrischer Leitfähigkeit anstelle von Weicheisen weitgehend eliminiert.

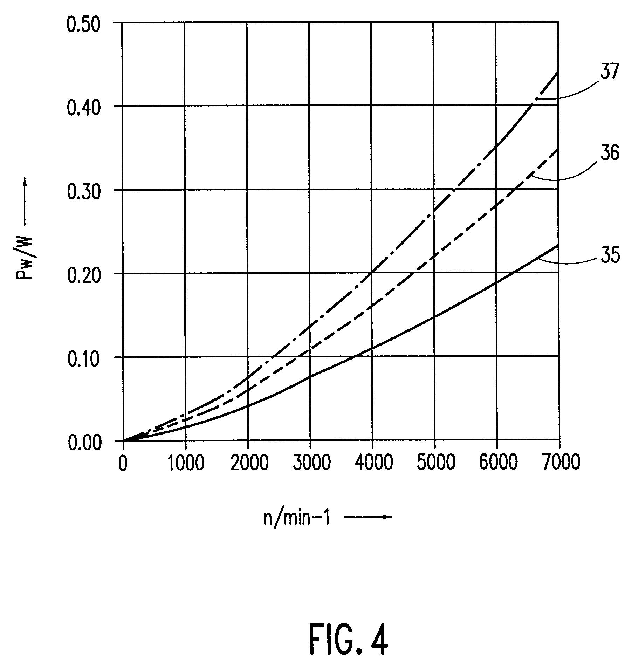

Fig. 4 zeigt beispielhaft für die Wirksamkeit der Maßnahme, die Größe und den Verlauf der gemessenen Eisenverluste in Watt aufgetragen über der mechanischen Drehzahl eines Motors, ausgebildet gemäß Fig. 1. Das Joch 12 ist alternativ aus drei verschiedenen Werkstoffen hergestellt.
Die Verlustkurve 35 ist gemessen mit einem Joch 12 aus geschichtetem Eisenblech,
die Verlustkurve 36 ist gemessen mit einem Joch 12 aus Siliziumeisen,
die Verlustkurve 37 ist gemessen mit einem Joch 12 aus Weicheisen.

Man erkennt, daß die Verluste bei einer Schichtung aus Eisenblech niedriger sind als bei massivem Eisenblech.

## Patentansprüche

1. Permanentmagneterregte elektrische Maschine, insbesondere Außenläufer- oder Innenläufermotor, mit gegeneinander bewegbaren Motorteilen (10, 20), von denen das erste Motorteil (10) in einem Luftspalt (1) mittels an einem Weicheisenjoch angeordneter Permanentmagnete (11), die mit dem Weicheisenjoch einen magnetischen Rückschlup bilden, ein mehrpoliges Erregerfeld ausbildet und von denen das zweite Motorteil (20) ein Weicheisenjoch (21) mit in Richtung auf den Luftspalt (1) vorstehenden Polzähnen (22) ist, die mit Spulen (23) umwickelt sind, dadurch gekennzeichnet, daß das Joch (12) des ersten, die Permanentmagnete tragenden Motorteils (10) aus Bauteilen hoher magnetischer und niedriger elektrischer Leitfähigkeit gebildet ist, so daß der magnetische Fluß in diesem Joch (12) nicht, die Ausbildung der Wirbelströme jedoch so weit wie möglich, reduziert ist.

2. Permanentmagneterregte elektrische Maschine nach Anspruch 1, dadurch gekennzeichnet, daß das Joch (12) des ersten Motorteils (10) aus einem Verbundwerkstoff mit hoher magnetischer und niedriger elektrischer Leitfähigkeit besteht.

3. Permanentmagneterregte elektrische Maschine nach Anspruch 1, dadurch gekennzeichnet, daß der Werkstoff des Joches (12) des ersten Motorteils (10) Siliziumeisen ist.

4. Permanentmagneterregte elektrische Maschine nach Anspruch 1 oder 3, dadurch gekennzeichnet, daß das Joch (12) des ersten Motorteils (10) aus senkrecht zur Motorachse lamelliertem Elektro(z.B. Silizium)-Blech besteht.

5. Permanentmagneterregte elektrische Maschine nach Anspruch 1, 3 oder 4, dadurch gekennzeichnet, daß das Joch (12) des ersten Motorteils (10) aus parallel zur Motorachse gewickeltem, dünnem Elektro(z.B. Silizium)-Blech besteht.

6. Permanentmagneterregte elektrische Maschine nach Anspruch 5, dadurch gekennzeichnet, daß der Blechwickel aus amorphem Eisen besteht.

7. Permanentmagneterregte elektrische Maschine nach einem der Ansprüche 1 bis 6, dadurch gekennzeichnet, daß das Material der Permanentmagnete hochremament, z.B. ein Selten-Erde-Material, beispielsweise Samarium-Cobalt oder Neodymium-Eisen-Bor, ist.
